# DEMANDE DE BREVET EUROPEEN

(11) **EP 1 416 618 A1**
(43) Date de publication de la demande: **06.05.2004**
(21) Numéro de dépôt: 03292702.2
(22) Date de dépôt: 29.10.2003
(51) Int. Cl.: H02K 21/04, H02K 1/27

(54) **Rotor pour machine électrique tournante à double excitation et machine électrique correspondante**

(30) Priorité: 29.10.2002 FR 0213552
(71) Demandeur: PSA Peugeot Citroen, 78943 Vélizy-Villacoublay Cedex (FR); Centre National de la Recherche Scientifique ( CNRS), 75016 Paris (FR)
(72) Inventeur: Gabsi, Mohamed, 94230 Cachan (FR); Lecricain, Michel, 94200 Ivry-sur-Seine (FR); Vido, Lionel, 75019 Paris (FR); Chabot, Franck, 92130 Issy-Les-Moulineaux (FR)
(74) Mandataire: Habasque, Etienne Joel Jean-François

(57) **Abrégé**

Ce rotor (4) pour machine électrique tournante à double excitation comporte :
- un premier et un second flasques (30, 32) annulaires en matériau magnétique,
- un noyau magnétique denté (48) disposé entre lesdits flasques (30, 32),
- un ensemble de plots magnétiques successifs répartis à la surface périphérique du rotor et agencés pour définir des premiers plots magnétiques (42) et des seconds plots magnétiques de polarités opposées, les premiers et seconds plots magnétiques étant disposés alternativement suivant la périphérie du rotor, et chacun des premiers ou des seconds plots magnétiques comportant une dent radiale (47) du noyau (48).

Chacune des dents du noyau magnétique est en alternance, suivant la périphérie du noyau magnétique, soit magnétiquement raccordée au premier flasque pour former l'un des premiers plots magnétiques, soit isolée magnétiquement du premier flasque pour former l'un des seconds plots magnétiques.

## Description

L'invention concerne une machine électrique tournante à double excitation et, plus particulièrement, un rotor pour cette machine comportant :
- un premier et un second flasques annulaires en matériau magnétique, disposés coaxialement suivant l'axe du rotor,
- un coeur magnétique annulaire disposé entre lesdits flasques et coaxialement suivant l'axe du rotor,
- des dents radiales faisant saillie vers l'extérieur par rapport au coeur annulaire et reliées magnétiquement audit coeur,
- entre lesdits flasques, un ensemble de plots magnétiques successifs répartis à la surface périphérique du rotor et agencés pour définir des premiers plots magnétiques et des seconds plots magnétiques de polarités opposées, les premiers et seconds plots magnétiques étant disposés alternativement suivant la périphérie du rotor, et chacun des premiers plots magnétiques comportant une dent radiale.

De telles machines sont notamment décrites dans la demande de brevet FR 2 786 956, déposée le 7 décembre 1998 par le Centre National de la Recherche Scientifique.

Ces machines comprennent un rotor et un stator.

Le stator comporte un noyau magnétique annulaire équipé d'un bobinage statorique, et un bobinage d'excitation. Le noyau annulaire et les bobinages statorique et d'excitation sont disposés dans une couronne magnétique en contact avec la surface extérieure du noyau annulaire. Cette couronne comprend, à chaque extrémité, un rebord d'extrémité radial.

Le rotor comporte deux flasques annulaires en matière magnétique ayant chacun des portions périphériques définissant, avec les rebords d'extrémité latéraux de la couronne magnétique du stator, des entrefers de retour de flux. Le rotor comporte également, disposé entre les deux flasques annulaires, un noyau magnétique cylindrique pourvu de dents radiales, chaque dent formant un premier plot magnétique. Ce noyau pourvu de dents est formé d'une seule et même pièce. Le rotor est aussi équipé de barres de liaison des deux flasques annulaires. Ces barres de liaison sont logées dans les intervalles entre les dents radiales du noyau magnétique et forment des seconds plots magnétiques d'une polarité opposée à celle des premiers plots magnétiques.

Ces machines électriques tournantes à double excitation présentent de bonnes performances. Toutefois, le rotor de ces machines est particulièrement coûteux à réaliser.

En effet, l'intervalle entre les dents du noyau doit être adapté pour recevoir les barres de liaison. Or, de tels noyaux magnétiques dentés ne sont pas disponibles dans le commerce et doivent donc être spécialement réalisés à cet effet. Ces noyaux sont donc chers.

L'invention vise à remédier à cet inconvénient en proposant un rotor pour une machine électrique tournante à double excitation dont la fabrication est moins coûteuse.

L'invention a donc pour objet un rotor pour machine électrique tournante à double excitation, tel que défini plus haut, caractérisé en ce que chacun des seconds plots magnétiques comporte une dent radiale faisant saillie vers l'extérieur par rapport au coeur magnétique et reliée magnétiquement audit coeur, et chacune des dents est en alternance, suivant la périphérie du coeur magnétique, soit magnétiquement raccordée au premier flasque pour former l'un des premiers plots magnétiques, soit isolée magnétiquement du premier flasque pour former l'un des seconds plots magnétiques.

Un rotor tel que décrit ci-dessus est moins coûteux à fabriquer.

En effet, chacun des premiers et seconds plots magnétiques sont matériellement constitués d'une dent en contact magnétique avec le coeur magnétique, et seul le raccordement magnétique de cette dent au flasque d'extrémité permet de distinguer un premier plot magnétique d'un second plot magnétique. Ainsi, contrairement à ce qu'enseigne la demande de brevet FR 2 786 956, les seconds plots magnétiques ne sont pas réalisés à l'aide de barres de liaison indépendantes assemblées dans les intervalles entre les dents du noyau magnétique formant les premiers plots magnétiques. Il est donc possible d'utiliser, dans le rotor décrit ci-dessus, des noyaux magnétiques de machines à concentration de flux standards. Ces noyaux magnétiques standard sont moins coûteux, ce qui diminue d'autant le coût de réalisation du rotor pour une machine tournante à double excitation.

Suivant d'autres caractéristiques d'un rotor conforme à l'invention :
- il comporte une cale magnétique interposée entre chaque dent d'un premier plot magnétique et le premier flasque annulaire pour établir un circuit magnétique entre les premiers plots magnétiques et le premier flasque annulaire, et un espace latéral d'isolation est ménagé entre chaque dent d'un second plot magnétique, et le premier flasque annulaire pour inhiber l'établissement d'un circuit magnétique entre les seconds plots et le premier flasque annulaire,
- dans le cadre d'une machine homopolaire, il comporte une cale magnétique interposée entre chaque dent d'un premier plot magnétique et le second flasque annulaire pour établir un circuit magnétique entre les premiers plots magnétiques et le second flasque annulaire, et il comporte un espace latéral d'isolation ménagé entre chaque dent d'un second plot magnétique et le second flasque annulaire pour inhiber l'établissement d'un circuit magnétique entre les seconds plots magnétiques et le second flasque annulaire,
- dans le cadre d'une machine bipolaire, un espace latéral d'isolation est ménagé entre chaque dent d'un premier plot magnétique et le second flasque annulaire pour inhiber l'établissement d'un circuit magnétique entre les premiers plots magnétiques et le second flasque annulaire, et le rotor comporte une cale magnétique interposée entre chaque dent d'un second plot magnétique et le second flasque annulaire pour établir un circuit magnétique entre les seconds plots magnétiques et le second flasque annulaire,
- chaque dent est séparée de la dent suivante le long de la périphérie du coeur par un intervalle d'isolation magnétique, et des aimants azimutaux d'isolation magnétique et de renforcement magnétique du flux magnétique dans les dents sont logés dans les intervalles séparant deux dents successives,
- des aimants latéraux sont logés dans les espaces latéraux d'isolation situés entre l'extrémité d'une dent et le flasque annulaire correspondant,
- le coeur magnétique est réalisé en tôle magnétique feuilletée,
- les dents sont venues de matière avec le coeur magnétique,
- les dents sont identiques les unes aux autres,
- la section transversale des dents est constante.

L'invention a également pour objet une machine électrique tournante à double excitation contenant un stator et un rotor, caractérisée en ce que le rotor est conforme à l'invention, et en ce que les premier et second flasques annulaires du rotor comportent chacun une portion définissant avec le stator un entrefer de retour de flux magnétique.

Suivant d'autres caractéristiques d'une machine électrique à double excitation conforme à l'invention :
- elle est homopolaire et le rotor est conforme au rotor décrit plus haut, dans le cadre d'une machine électrique tournante à double excitation homopolaire,
- elle est bipolaire et le rotor est conforme au rotor décrit plus haut, dans le cadre d'une machine électrique tournante à double excitation bipolaire,
- le stator comporte :
   - un noyau magnétique annulaire,
   - au moins un bobinage d'excitation,
   - un bobinage statorique bobiné sur le noyau annulaire,
   - au moins une couronne magnétique en contact avec la surface extérieure du noyau annulaire, ladite au moins une couronne magnétique comprenant, à chaque extrémité, un rebord d'extrémité radial définissant, avec les portions des flasques annulaires du rotor l'entrefer de retour de flux.

L'invention sera mieux comprise à la lecture de la description qui va suivre, donnée uniquement à titre d'exemple, et faite en se référant aux dessins, sur lesquels :
- la figure 1 est une vue partielle de face et en coupe d'une machine électrique tournante à double excitation homopolaire comportant un rotor conforme à l'invention ;
- la figure 2 est une vue partielle en coupe suivant la ligne 2-2 de la figure 1 ;
- la figure 3 est une vue de dessus d'une portion de la périphérie extérieure du rotor de la machine de la figure 1 ; et
- les figures 4A et 4B sont, respectivement, une vue de dessus de la périphérie extérieure et une vue partielle de face et en coupe d'une variante d'un rotor conforme à l'invention pour une machine électrique tournante à double excitation bipolaire.

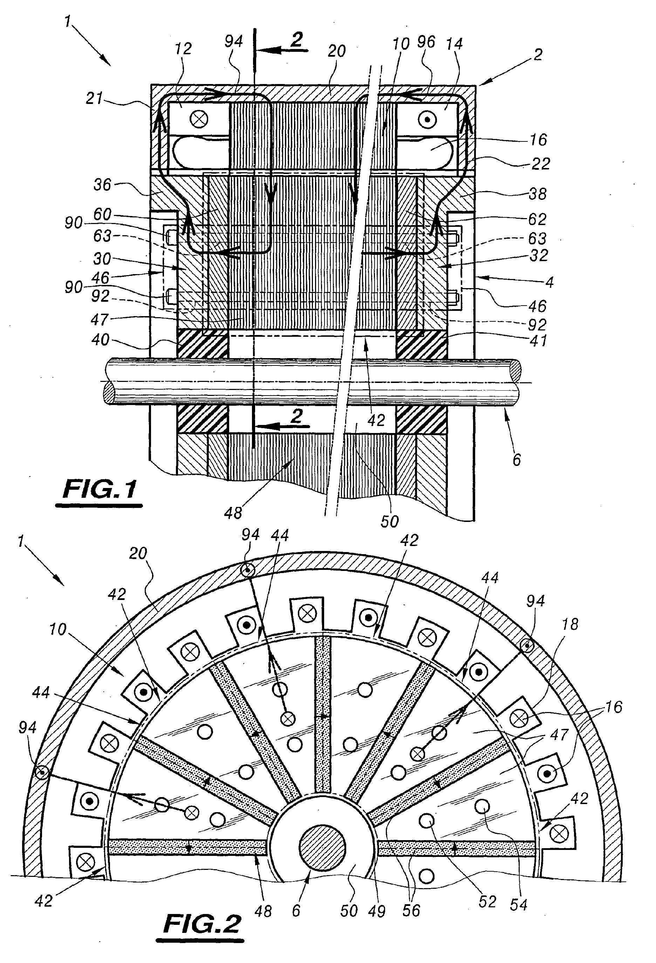

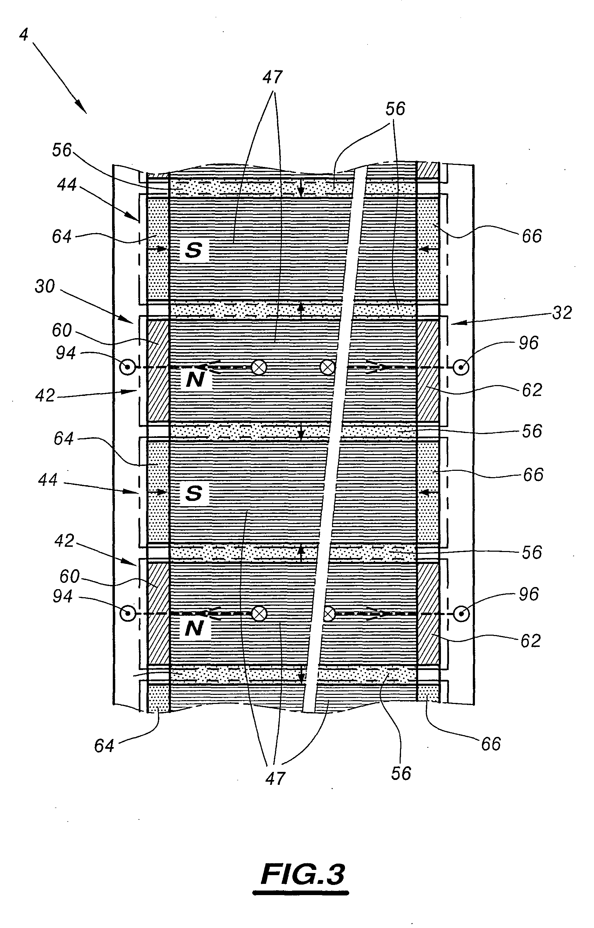

Les figures 1, 2 et 3 représentent une machine 1 électrique tournante à double excitation homopolaire comportant un stator 2 et un rotor 4 monté sur un arbre 6.

Le stator 2 comporte un noyau annulaire 10 en tôle magnétique feuilletée de part et d'autre duquel sont disposés des bobinages d'excitation 12, 14. Les courants circulant dans ces bobinages d'excitation 12, 14 sont de sens opposés.

Un bobinage statorique 16, entouré par les bobinages d'excitation 12, 14, est bobiné sur le noyau annulaire 10 qui présente, à cet effet, une surface intérieure formée de créneaux 18, comme représenté sur la figure 2.

L'ensemble du stator est logé dans une couronne magnétique extérieure 20 qui est en contact avec une surface extérieure du noyau magnétique 10. Cette couronne magnétique 20 comporte des rebords latéraux d'extrémité 21, 22 tournés vers le rotor 4.

Le rotor 4 comporte deux flasques annulaires d'extrémité 30,32 entre lesquels est interposé un ensemble de plots magnétiques. Chaque flasque 30, 32 comporte un rebord axial périphérique 36, 38 dirigé vers l'extérieur et en regard des rebords latéraux 21, 22 respectifs. Ces rebords axiaux périphériques 36, 38 définissent, avec les rebords latéraux d'extrémité 21, 22, des entrefers de retour de flux entre le rotor 4 et le stator 2.

Des bagues 40, 41, en matière amagnétique, par exemple en matière magnétiquement isolante, sont interposées entre l'arbre 6 et les flasques 30, 32 correspondants.

L'ensemble de plots magnétiques comporte des premiers plots magnétiques 42 et des seconds plots magnétiques 44 de polarités opposées répartis successivement et en alternance suivant la périphérie extérieure du rotor 4, en regard du stator 2. Ces premiers et seconds plots magnétiques 42, 44 sont fixés aux flasques 30, 32 à l'aide de moyens de fixation 46.

Dans le mode de réalisation décrit ici, l'ensemble des premiers plots magnétiques 42 sont identiques les uns aux autres et l'ensemble des seconds plots magnétiques 44 sont également identiques les uns aux autres. Ainsi, dans la suite de la description, seuls un premier plot et un second plot magnétiques seront décrits.

Chacun des premiers et seconds plots magnétiques 42, 44 comportent une dent 47 d'un même noyau magnétique denté 48.

Le noyau magnétique denté 48 comporte un coeur magnétique annulaire 49 à la surface extérieure duquel sont formées les dents 47. Ce coeur magnétique est disposé entre les flasques 30, 32 coaxialement à l'axe du rotor 4 et les dents radiales 47 sont réparties à intervalles réguliers suivant sa périphérie extérieure. Chaque dent 47 est de section transversale constante et fait saillie vers l'extérieur du coeur magnétique 49. De plus, les dents radiales 47 sont identiques les unes aux autres et sont, par exemple, toutes venues de matière avec le coeur magnétique 49. Chacune des dents 47 comporte une extrémité tournée vers le flasque 30 et une autre extrémité tournée vers le flasque 32. Ces deux extrémités de chaque dent 47 sont adaptées pour recevoir les moyens de fixation 46. Ici, chaque dent 47 est traversée de part en part par deux trous 52, 54, ces trous s'ouvrant sur chacune des extrémités de la dent. Un intervalle entre deux dents 47 successives est ménagé et forme un espace d'isolation destiné à isoler magnétiquement les dents 47 les unes des autres. Ici, des aimants azimutaux 56 sont logés dans ces intervalles de manière à, à la fois, limiter l'établissement de lignes de fuite de champ magnétique entre deux dents 47 successives, et à renforcer le flux magnétique dans chacune des dents 47. Ainsi, deux aimants azimutaux 56, de polarités opposées, sont disposés de part et d'autre de chaque dent 47. Ces aimants azimutaux 56 sont directement appliqués sur des faces latérales des dents 47.

La surface périphérique intérieure du coeur magnétique 49 est séparée de l'axe 6 du rotor 4 par un espace axial 50 destiné à limiter l'établissement de lignes de fuite de champ magnétique entre deux dents 47 successives. En effet, la quantité de matière magnétique, entre le fond de l'intervalle séparant deux dents 47 successives et l'espace d'isolation 50, forme un court-circuit magnétique entre ces deux dents 47 successives. L'espace d'isolation 50 prévu entre l'arbre 6 et la surface intérieure du coeur magnétique 49 permet de réduire cette quantité de matière magnétique reliant deux dents successives et donc de limiter les lignes de fuite de champ magnétique entre ces deux dents 47 successives. Le diamètre de l'espace axial 50 est ici choisi pour faire apparaître un phénomène de saturation magnétique dans cette quantité de matière reliant deux dents successives. Ce phénomène est similaire à celui connu dans les machines à concentration de flux.

Dans l'exemple de mode de réalisation décrit ici, le noyau 48 est réalisé en tôle magnétique feuilletée pour limiter la création de courant de Foucault et donc les pertes d'énergie. Avantageusement, ce noyau magnétique 48 denté est identique à un noyau magnétique denté standard adapté par exemple pour réaliser un rotor bobiné de machine électrique tournante à concentration de flux.

Dans le cadre d'une machine tournante à double excitation homopolaire, chaque premier plot magnétique 42 comporte des moyens de raccordement magnétique de la dent 47 de ce premier plot magnétique aux flasques d'extrémité 30, 32. Ces moyens de raccordement magnétique comportent par exemple deux cales magnétiques 60, 62. Ces deux cales magnétiques 60, 62 sont identiques l'une à l'autre et sont de section transversale identique à celle de la dent 47. De plus, chaque cale 60, 62 comporte ici des trous 63 de passage des moyens de fixation 46. Ces cales 60, 62 sont ici réalisées en matériau ferreux non feuilleté. La cale 60 est interposée entre l'extrémité de la dent 47 tournée vers le flasque 30, et le flasque 30. La cale 62 est interposée entre l'extrémité de la dent 47 tournée vers le flasque 32, et le flasque 32. Ces cales 60, 62 sont directement appliquées sur les surfaces correspondantes de la dent 47 et des flasques 30, 32 et repose sur les bagues amagnétiques 40, 41.

Toujours dans le cadre de la réalisation d'un rotor pour une machine électrique tournante à double excitation homopolaire, chaque second plot magnétique 44 comporte des moyens d'isolation magnétique de la dent 47 de ce second plot magnétique, des flasques 30, 32. Ces moyens d'isolation comportent deux espaces d'isolation latéraux ménagés entre, d'une part, l'extrémité de la dent 47 tournée vers le flasque 30, et le flasque 30 et, d'autre part, entre l'extrémité de la dent 47 tournée vers le flasque 32, et le flasque 32. Dans le mode de réalisation décrit ici, deux aimants latéraux 64, 66 de polarité opposée sont logés chacun dans un de ces espaces latéraux d'isolation. Ces aimants latéraux 64, 66 sont identiques les uns aux autres. Ils sont disposés dans les espaces latéraux d'isolation de manière à, à la fois, isoler magnétiquement la dent 47 des flasques d'extrémité, et renforcer le flux magnétique circulant dans cette même dent 47. Ces aimants 64, 66 sont ici de section identique à celle de la dent 47 et comportent chacun deux trous (non représentés) de passage des moyens de fixation 46. L'aimant 64 est interposé entre l'extrémité de la dent 47 tournée vers le flasque 30, et le flasque 30. L'aimant 66 est interposé, quant à lui, entre l'extrémité de la dent 47 tournée vers le flasque 32, et le flasque 32. Ces aimants 64, 66 sont directement appliqués sur les surfaces respectives de la dent 47 et des flasques 30, 32.

Les moyens de fixation 46 sont ici démontables. Ils sont par exemple formés de vis 90 en matériau amagnétique pour limiter l'établissement d'un circuit magnétique par l'intermédiaire de celles-ci. Ces vis sont logées dans les trous 52, 54 et traversent de part en part le flasque d'extrémité au travers de passages 92, ainsi que les cales magnétiques 60, 62 ou les aimants latéraux 64, 66. Elles sont retenues dans les trous de fixation 52, 54 par des écrous. Ainsi, en position active, les vis 90 solidarisent les dents 47 aux flasques d'extrémité 30, 32 et coincent également les cales magnétiques 60, 62 ou les aimants latéraux 64, 66 entre les dents 47 et les flasques 30, 32.

Lors du fonctionnement de cette machine électrique tournante à double excitation homopolaire, un premier circuit magnétique 94 s'établit par la couronne magnétique 20 du stator, le rebord 21, le flasque annulaire d'extrémité 30 et uniquement les premiers plots magnétiques 42. Un second circuit magnétique 96, distinct du premier circuit magnétique, s'établit par la couronne magnétique 20 du stator, le rebord 22, le flasque annulaire d'extrémité 32 et uniquement les premiers plots magnétiques 42. En effet, seuls les premiers plots magnétiques sont reliés magnétiquement de part et d'autre aux flasques annulaires d'extrémité 30 et 32.

Le flux magnétique généré par les bobines d'excitation 12, 14 n'emprunte donc pas un trajet passant par les aimants latéraux 64, 66 ou par les aimants azimutaux 56. Ainsi, les risques de démagnétisation de ces aimants sont diminués.

Grâce au rotor décrit ci-dessus, les opérations de montage des barres de liaison, telles que décrites dans la demande de brevet FR 2 786 956, sont supprimées. Ainsi, le coût de réalisation de ce rotor est diminué.

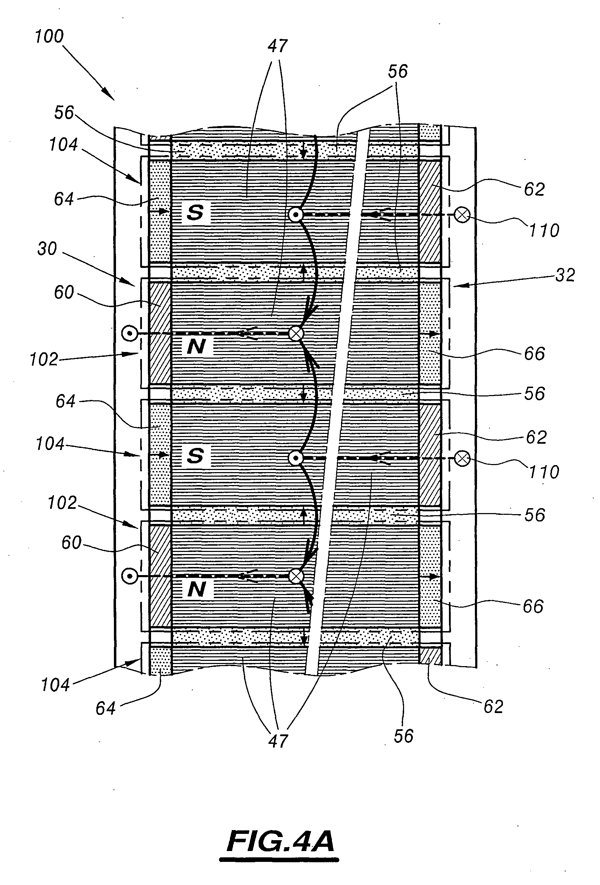

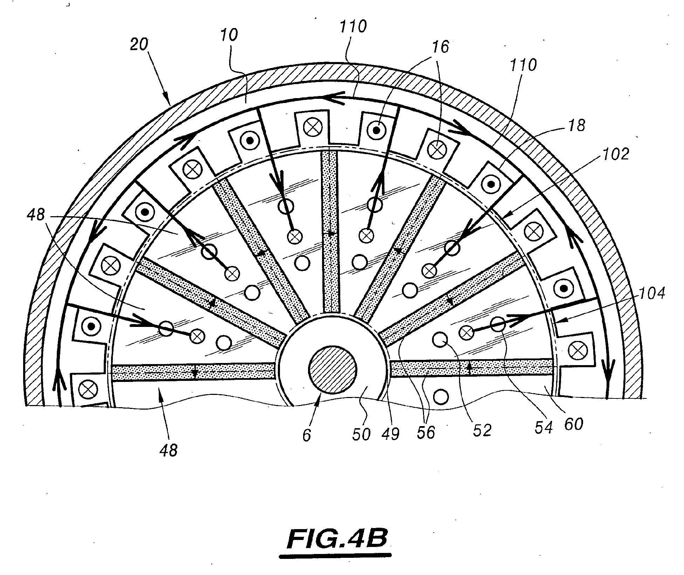

Les figures 4A et 4B représentent un rotor 100 pour une machine électrique tournante à double excitation bipolaire. Le stator d'une telle machine est identique à celui décrit en regard de la figure 1 et ne sera pas décrit ici. En effet, seul le sens de rotation des courants dans les bobinages d'excitation 12, 14 est modifié. Pour une machine bipolaire, le courant circulant dans le bobinage d'excitation 12 est dans le même sens que celui circulant dans le bobinage d'excitation 14.

Les pièces formant le rotor 100 de la machine bipolaire sont identiques à celles décrites en regard des figures 1 à 3 et portent donc les mêmes références. Ici, seule la disposition des cales magnétiques 62 et des aimants latéraux 66 permet de différencier ce rotor 100 du rotor 4.

Dans cette variante, le rotor 100 comporte des premiers plots magnétiques 102 et des seconds plots magnétiques 104 de polarités opposées.

Les premiers plots magnétiques 102 sont identiques les uns aux autres. Chaque premier plot magnétique 102 est adapté pour être raccordé magnétiquement uniquement au flasque 30. Pour cela, chaque premier plot magnétique 102 comporte une dent 47 du noyau magnétique 48, des moyens de raccordement magnétique de cette dent au flasque 30 et des moyens d'isolation magnétique de cette dent du flasque 32. Les moyens de raccordement magnétique sont ici identiques à ceux décrits en regard des figures 1 à 3. Il s'agit donc de la cale magnétique 60. De même, les moyens d'isolation magnétique de ce premier plot magnétique 102 sont identiques à ceux décrits en regard des figures 1 à 3. Il s'agit donc ici d'un espace latéral d'isolation dans lequel est logé l'aimant latéral 66. Toutefois, contrairement à la machine homopolaire des figures 1 à 3, le pôle Nord de cet aimant 66 est tourné vers le flasque 32.

Les seconds plots magnétiques 104 sont adaptés pour être raccordés magnétiquement uniquement au flasque 32. Pour cela, chacun de ces seconds plots magnétiques 104 comporte une dent 47 du noyau magnétique 48, des moyens de raccordement magnétique de cette dent 47 au flasque 32 et des moyens d'isolation magnétique de cette dent 47 du flasque 30. Les moyens de raccordement et d'isolation magnétiques sont respectivement identiques à ceux décrits en regard des figures 1 à 3. Il s'agit donc ici, pour chaque second plot magnétique 104, d'une cale magnétique 62 et d'un espace latéral d'isolation dans lequel est logé un aimant latéral 64.

Lors du fonctionnement du rotor 100, un circuit magnétique 110 s'établit par la couronne magnétique 20, les flasques 30, 32 et les premiers et seconds plots magnétiques 102, 104. Ce circuit magnétique 100 passe du rebord 22 de la couronne magnétique 20 vers le flasque 32, puis du flasque 32 vers les seconds plots magnétiques 104. Il ressort ensuite des seconds plots magnétiques par leur surface tournée vers le stator 2 et entre dans le noyau annulaire 10. Le circuit magnétique 110 ressort du noyau annulaire 10 et pénètre à l'intérieur des premiers plots magnétiques 102 par leur surface tournée vers le stator. Le circuit magnétique 110 à l'intérieur des premiers plots magnétiques 102 se referme par le flasque 30 et le rebord 21 de la couronne magnétique 20.

Le noyau magnétique dentée 48 a été décrit ici comme étant réalisé en tôle magnétique feuilletée. En variante, ce noyau magnétique est réalisé en matériau ferreux non feuilleté.

Ici, les moyens d'isolation ont été décrits dans le cas particulier où un aimant est logé dans l'espace latéral d'isolation magnétique. Toutefois, en variante, cet aimant est supprimé et les moyens d'isolation consistent en un espace d'isolation uniquement rempli d'air, ménagé entre la dent à isoler et le flasque correspondant.

De même, en variante, les aimants azimutaux logés dans les intervalles entre deux dents 47 successives sont supprimés. Dans cette variante, l'intervalle entre deux dents successives 47 forme un espace d'isolation magnétique des dents 47 entre elles. Cet espace est, par exemple, uniquement rempli d'air.

En combinant les deux variantes précédentes, un rotor pour machine électrique tournante à double excitation, tel que décrit ci dessus, ne comporte aucun aimant.

Les dents 47 ont été décrites comme étant venues de matière avec le coeur magnétique 49. En variante, les dents 47 sont fixées, à l'aide de moyens de fixation supplémentaires, sur la surface extérieure du coeur magnétique 49. Les moyens de fixation supplémentaires sont adaptés pour que les dents fixées soient en contact magnétique avec le coeur magnétique.

En variante, au moins l'un des aimants choisi dans le groupe des aimants 56, 64 et 66 est remplacé par une pièce en matériau amagnétique. Cette pièce en matériau amagnétique remplit la même fonction que les aimants en terme d'isolation magnétique mais ne renforce pas le flux magnétique circulant dans les dents 47.

## Revendications

1. Rotor (4 ; 100) pour machine électrique tournante à double excitation comportant :
- un premier et un second flasques (30, 32) annulaires en matériau magnétique, disposés coaxialement suivant l'axe du rotor,
- un coeur magnétique annulaire (49) disposé entre lesdits flasques (30, 32) et coaxialement suivant l'axe du rotor (4),
- des dents radiales (47) faisant saillie vers l'extérieur par rapport au coeur annulaire et reliées magnétiquement audit coeur,
- entre lesdits flasques (30, 32), un ensemble de plots magnétiques successifs répartis à la surface périphérique du rotor et agencés pour définir des premiers plots magnétiques (42 ; 102) et des seconds plots magnétiques (44 ; 104) de polarités opposées, les premiers et seconds plots magnétiques (42, 44 ; 102, 104) étant disposés alternativement suivant la périphérie du rotor, et chacun des premiers plots magnétiques (42 ; 102) comportant une dent radiale (44 ; 104),
**caractérisé en ce que** chacun des seconds plots magnétiques (44), comporte une dent radiale (47) faisant saillie vers l'extérieur par rapport au coeur magnétique (49) et reliée magnétiquement audit coeur, et **en ce que** chacune des dents (47) est en alternance, suivant la périphérie du coeur magnétique (49), soit magnétiquement raccordée au premier flasque (30) pour former l'un des premiers plots magnétiques (42 ; 102), soit isolée magnétiquement du premier flasque (30) pour former l'un des seconds plots magnétiques (44).

2. Rotor (4 ; 100) selon la revendication 1, **caractérisé en ce qu'**il comporte une cale magnétique (60) interposée entre chaque dent (47) d'un premier plot magnétique (42 ; 102), et le premier flasque annulaire (30) pour établir un circuit magnétique entre les premiers plots magnétiques (42 ; 102) et le premier flasque annulaire (30), et **en ce qu'**un espace latéral d'isolation est ménagé entre chaque dent (47) d'un second plot magnétique (44 ; 104), et le premier flasque annulaire (30) pour inhiber l'établissement d'un circuit magnétique entre les seconds plots magnétiques (44 ; 104) et le premier flasque annulaire (30).

3. Rotor (4) pour machine électrique tournante à double excitation homopolaire selon la revendication 2, **caractérisé en ce qu'**il comporte une cale magnétique (62) interposée entre chaque dent (47) d'un premier plot magnétique (42) et le second flasque annulaire (32) pour établir un circuit magnétique entre les premiers plots magnétiques (42) et le second flasque annulaire (32), et **en ce qu'**il comporte un espace latéral d'isolation ménagé entre chaque dent (47) d'un second plot magnétique (44) et le second flasque annulaire (32) pour inhiber l'établissement d'un circuit magnétique entre les seconds plots magnétiques (44) et le second flasque annulaire (32).

4. Rotor (100) pour machine électrique tournante à double excitation bipolaire selon la revendication 2, **caractérisé en ce qu'**un espace latéral d'isolation est ménagé entre chaque dent (47) d'un premier plot magnétique (102) et le second flasque annulaire (32) pour inhiber l'établissement d'un circuit magnétique entre les premiers plots magnétiques (102) et le second flasque annulaire (32), et **en ce que** le rotor (100) comporte une cale magnétique (62) interposée entre chaque dent (47) d'un second plot magnétique (104) et le second flasque annulaire (32) pour établir un circuit magnétique entre les seconds plots magnétiques (44) et le second flasque annulaire (32).

5. Rotor (4 ; 100) selon l'une quelconque des revendications précédentes, **caractérisé en ce que** chaque dent (47) est séparée de la dent suivante le long de la périphérie du coeur (49) par un intervalle d'isolation magnétique, et **en ce que** des aimants (56) azimutaux d'isolation magnétique et de renforcement magnétique du flux magnétique dans les dents (47) sont logés dans ces intervalles séparant deux dents (47) successives.

6. Rotor (4 ; 100) selon l'une quelconque des revendications 2 à 5, **caractérisé en ce que** des aimants latéraux (64, 66) sont logés dans les espaces latéraux d'isolation situés entre l'extrémité d'une dent (47) et le flasque annulaire (30, 32) correspondant.

7. Rotor (4 ; 100) selon l'une quelconque des revendications précédentes, **caractérisé en ce que** les dents (47) sont venues de matière avec le coeur magnétique (49).

8. Rotor (4 ; 100) selon l'une quelconque des revendications précédentes, **caractérisé en ce que** le noyau magnétique denté (48) est réalisé en tôle magnétique feuilletée.

9. Rotor (4 ; 100) selon l'une quelconque des revendications précédentes, **caractérisé en ce que** les dents (47) sont identiques les unes aux autres.

10. Rotor (4 ; 100) selon l'une quelconque des revendications précédentes, **caractérisé en ce que** la section transversale des dents (47) est constante.

11. Machine électrique tournante à double excitation contenant un stator (2) et un rotor (4 ; 100), **caractérisée en ce que** le rotor (4 ; 100) est conforme à l'une quelconque des revendications précédentes, et **en ce que** les premier et second flasques annulaires (30, 32) du rotor (4 ; 100) comportent chacun une portion (36, 38) définissant avec le stator (2) un entrefer de retour de flux magnétique.

12. Machine électrique tournante à double excitation homopolaire selon la revendication 11, **caractérisée en ce qu'**elle est homopolaire, et **en ce que** le rotor (4) est conforme à la revendication 3.

13. Machine électrique tournante à double excitation selon la revendication 11, **caractérisée en ce qu'**elle est bipolaire, et **en ce que** le rotor (100) est conforme à la revendication 4.

14. Machine électrique tournante selon l'une quelconque des revendications 11 à 13, **caractérisée en ce que** le stator (2) comporte :
- un noyau magnétique annulaire (10),
- au moins un bobinage d'excitation (12, 14),
- un bobinage statorique (16) bobiné sur le noyau magnétique annulaire (10),
- au moins une couronne magnétique (20) en contact avec la surface extérieure du noyau magnétique annulaire (10), ladite au moins une couronne magnétique (20) comprenant, à chaque extrémité, un rebord d'extrémité radial (21, 22) définissant, avec les portions (36, 38) des flasques annulaires (30, 32) du rotor (4 ; 100) un entrefer de retour de flux.
